Europäisches Patentamt

European Patent Office

Office européen des brevets

(11) Numéro de publication: **0 424 320 A1**

# DEMANDE DE BREVET EUROPEEN

(21) Numéro de dépôt: 90810783.2

(22) Date de dépôt: **12.10.90**

(51) Int. Cl.5: **B23P 19/04**

(30) Priorité: **19.10.89 FR 8913701**

(43) Date de publication de la demande:
**24.04.91 Bulletin 91/17**

(84) Etats contractants désignés:
**AT BE CH DE DK ES GB GR IT LI LU NL SE**

(71) Demandeur: **CONSTRUCTIONS MECANIQUES DE LA GUIDE**
**152, Boulevard Haussmann**
**F-75008 Paris(FR)**

(72) Inventeur: **Pringault, Marc**
**57, rue Benoît Malon**
**F-94250 Gentilly(FR)**

(74) Mandataire: **Dietlin, Henri**
**Dietlin & Cie S.A. Rue des Epinettes 19**
**CH-1227 Genève(CH)**

(54) **Dispositif automatique de mise en place de soupapes.**

(57) Ce dispositif automatique de mise en place des soupapes (10) d'un moteur à combustion interne sert à insérer des bi-cônes (13,14) dans une coupelle (11) sur la queue de soupape (15). Il comporte, dans un boîtier (20) muni d'un couvercle (30) :
- un coulisseau central (40) déplaçable selon la flèche A entre une position de retrait et une position de présentation des bi-cônes disposés de chaque côté du coulisseau,
- une paire de mâchoires (60) coulissantes sur des axes (70), écartées lorsque le coulisseau est en position de présentation, chaque mâchoire recevant un levier (80) destiné à maintenir un bi-cône dans sa partie inférieure et à le pousser vers l'intérieur, et
- des moyens de poussée (90) coopérant avec la coupelle, pour comprimer le ressort (12) de soupape, en synchronisme avec le mouvement du coulisseau (40).

Ce dispositif fonctionne quelle que soit l'inclinaison de la soupape. Grâce au faible encombrement, plusieurs dispositifs peuvent être juxtaposés.

Fig. 1

## DISPOSITIF AUTOMATIQUE DE MISE EN PLACE DE SOUPAPES

La présente invention est du domaine de la mécanique et concerne plus particulièrement un équipement pour la mise en place automatique des soupapes d'un moteur à combustion interne.

Les soupapes doivent être placées dans la culasse et comportent une queue de soupape faisant saillie vers l'extérieur, autour de laquelle est disposé un ressort de soupape prenant appui d'une part sur la culasse et d'autre part sur une coupelle fixée sur la queue de soupape au moyen d'une paire d'éléments formant un tronc de cône, communément appelés bi-cônes, disposés sur la face de la coupelle opposée au ressort. Les bi-cônes comportent une ou des nervures intérieures destinées à coopérer avec une ou des gorges pratiquées à l'extrémité de la queue de soupape.

A l'heure actuelle, les équipements de mise en place des bi-cônes dans les gorges des soupapes fonctionnent en utilisant la gravité ou par aspiration pneumatique.

Les inconvénients majeurs rencontrés dans les équipements réalisant, jusqu'à présent, ce type de montage sont la détérioration des bi-cônes et des queues de soupapes, dans une proportion importante, et surtout la nécessité d'orienter la culasse pour présenter les queues de soupapes suivant un axe vertical précis.

La présente invention vise à pallier ces inconvénients et a pour objet un dispositif automatique de mise en place de soupapes, à une ou plusieurs gorges et à axe vertical ou incliné, d'un moteur à combustion interne au moyen de bi-cônes insérés dans une coupelle sur la queue de soupape, du côté opposé au ressort de soupape, ce dispositif comportant des moyens de poussée aptes à coopérer avec la coupelle, pour maintenir ledit ressort dans une position prédéterminée de compression.

Ce dispositif est caractérisé en ce qu'il comporte :
- une paire de mâchoires déplaçables selon un axe B sensiblement perpendiculaire à la queue de soupape, et aptes à maintenir au moins indirectement lesdits bi-cônes, quelle que soit l'inclinaison de la queue de soupape par rapport à la verticale; et
- un coulisseau central déplaçable sensiblement dans l'axe de la queue de soupape entre une position non ajustée de présentation des bi-cônes et une position non ajustée de retrait du coulisseau, ledit coulisseau central comportant des moyens de commande du déplacement opposé de chaque mâchoire selon l'axe B lors du déplacement du coulisseau, et la partie extrême dudit coulisseau étant destinée à maintenir les bi-cônes écartés en position de présentation.

Dans une forme d'exécution préférentielle chaque mâchoire est montée sur des roulements à billes coulissant sur deux arbres parallèles à l'axe B et est soumise à la poussée d'un ressort agissant dans le sens inverse dudit déplacement opposé. Chaque mâchoire reçoit dans sa partie inférieure un levier articulé, dont l'extrémité comporte des moyens de préhension d'un bi-cône. Un ressort de traction est disposé entre la paire de leviers afin de les rapprocher.

Les mâchoires, le coulisseau et les moyens de poussée sont logés dans un boîtier constitué par un fond à deux ailes et muni d'un couvercle symétrique au fond. Les ailes comportent des ouvertures pour la fixation des arbres sur lesquelles les mâchoires peuvent coulisser, tandis que le fond du boîtier et son couvercle comportent chacun un prolongement central destiné à recevoir les moyens de compression du ressort de soupape.

Le coulisseau constitue la pièce principale du dispositif puisque selon sa position, il permet de commander le déplacement des mâchoires et la libération des bi-cônes sur les gorges de la queue de soupape. A cet effet, il comporte deux faces opposées présentant chacune un pan incliné destiné à coopérer avec un corps cylindrique en saillie sur les faces en regard de chaque mâchoire, de manière à ce que les mâchoires s'écartent l'une de l'autre en position de présentation des bi-cônes et se rapprochent lorsque le coulisseau est retiré. De plus la partie extrême du coulisseau destinée à maintenir les bi-cônes écartés en position de présentation est constituée par les dents d'une fourchette bordant un dégagement central apte à recevoir la queue de soupape alors que les dents présentent vers l'extérieur un dégagement apte à coopérer avec l'ouverture centrale de la coupelle.

Le coulisseau comporte en outre un piton transversal et est apte à pivoter sur l'axe de celui-ci pour assurer le parallélisme avec la queue de soupape, les extrémités du piton coulissant dans une rainure interne de guidage ménagée dans la face interne de chaque prolongement central lors du déplacement du coulisseau.

Les moyens de poussée sont constitués par deux tiges cylindriques destinées à coulisser dans les ouvertures pratiquées dans les prolongements du fond du boîtier et de son couvercle, chaque tige comportant à une extrémité un bloc apte à coopérer avec des moyens de commande d'un mouvement à l'encontre d'un ressort et à l'autre extrémité une partie arquée destinée à appuyer sur la coupelle de compression du ressort de soupape.

Les mouvements du coulisseau et des moyens de poussée peuvent être réalisés automatiquement, au moyen de vérins hydrauliques dont la commande est programmée dans une unité de gestion, assurant la succession des opérations.

Le dessin annexé représente, à titre d'exemple non limitatif, une forme d'exécution du dispositif monté dans l'équipement selon l'invention.

La figure 1 est une vue latérale du dispositif, avec coupe partielle de l'un des dispositifs de poussée du ressort de soupape, le coulisseau central étant en position de retrait.

La figure 2 est une coupe transversale selon II-II à la figure 1.

La figure 3 est une coupe transversale selon III-III à la figure 1.

La figure 4 est une coupe longitudinale du coulisseau central d'écartement des bi-cônes, dans le plan de la figure 1.

La figure 5 est une coupe longitudinale du dispositif, selon V-V à la figure 1, avec vue latérale partielle, le coulisseau central étant en position d'écartement des bi-cônes.

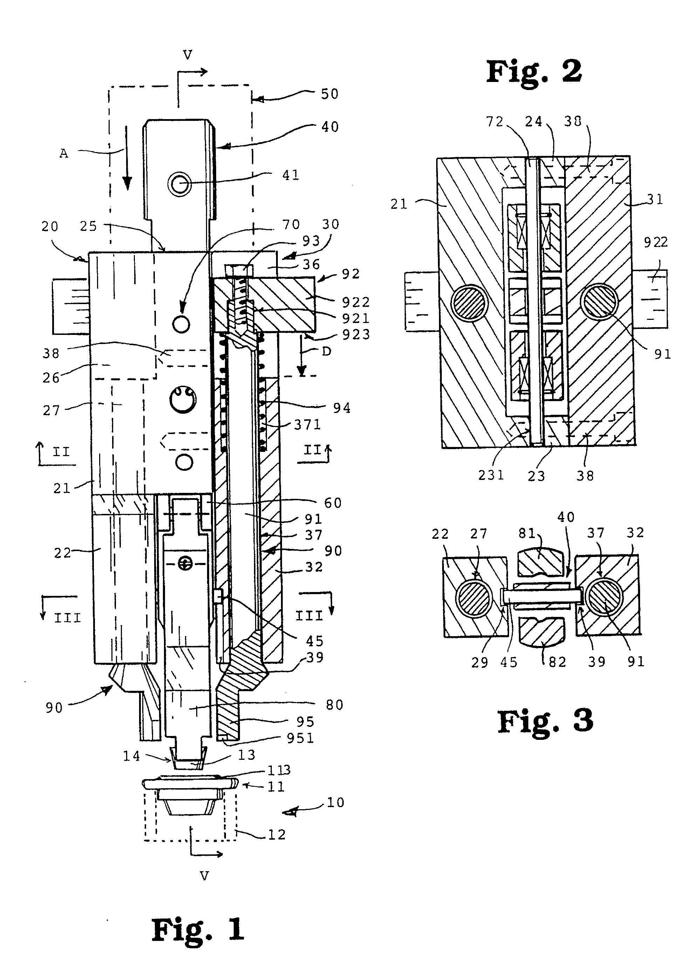

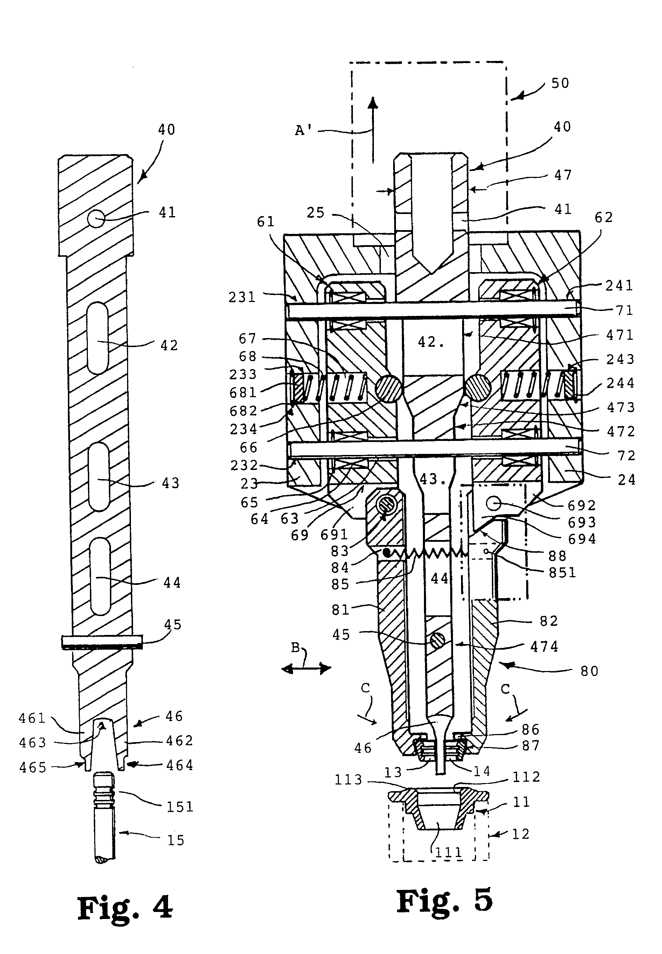

Le dispositif selon l'invention est représenté à la figure 1 dans sa position de fonctionnement au-dessus d'une culasse non représentée dans laquelle on doit fixer une soupape 10, schématisée par la coupelle 11 de serrage du ressort de soupape 12 schématisé en pointillés. La coupelle 11 est destinée à recevoir une paire de bi-cônes 13 et 14 dans un dégagement 111 tronconique (visible à la figure 5). Pour la clarté du dessin, la coupelle 11 est représentée séparée du dispositif, comme d'ailleurs la queue de soupape 15 de la figure 4.

On a représenté au dessin une queue de soupape à trois gorges 151 et des bi-cônes 13 et 14 à trois nervures (figure 5), mais il va sans dire que le dispositif est également fonctionnel pour des bi-cônes ayant une autre configuration, par exemple des éléments monogorge.

Le dispositif est monté dans un boîtier 20 muni d'un couvercle latéral 30 au centre desquels est monté un coulisseau central 40 d'écartement des bi-cônes, soumis à l'action d'un piston 50 représenté en traitillés. Le boîtier renferme également une pince 60 à deux mâchoires, montées coulissantes, dans un plan sensiblement perpendiculaire à la queue de soupape, sur des moyens de guidage 70. Chaque mâchoire comporte à son extrémité inférieure un levier 80. L'ensemble est complété par un dispositif de poussée 90, destiné à assurer la compression du ressort de soupape 12.

Le boîtier 20 comporte plus précisément un fond 21 présentant vers le bas un prolongement central 22, et deux ailes latérales 23 et 24, visibles aux figures 2 et 5. A cette dernière figure, on remarquera que les ailes latérales 23 et 24 comportent chacune deux ouvertures 231,241 et 232,242 destinées à la fixation de deux arbres parallèles 71 et 72 constituant les moyens de guidage 70. Les ailes latérales 23 et 24 comportent encore un dégagement 233 et 243 muni d'une rainure 234 et 244, dont l'utilité sera mentionnée plus loin.

Dans sa partie supérieure, le boîtier 20 comporte une ouverture centrale 25, pour le passage du coulisseau central 40 et un dégagement latéral 26 prolongé par une ouverture de part en part 27, pour le passage du dispositif de poussée 90.

Le boîtier 20 est en outre muni de moyens de fixation à un élément mobile de la machine de transfert, non représentés au dessin.

Le couvercle 30 est constitué de manière symétrique au fond 21 du boîtier. Il comporte donc une plaque 31 présentant vers le bas un prolongement central 32 et un dégagement latéral 36 prolongé par une ouverture de part en part 37, pour le passage du dispositif de poussée 90. Le couvercle 30 est rendu solidaire du boîtier 20 par des vis 38. On peut prévoir en outre des éléments de guidage du couvercle par rapport au boîtier, réalisés de manière conventionnelle et non représentés au dessin.

Chaque prolongement central 22 ou 32 comporte en outre une rainure interne verticale 29 ou 39 de guidage (figure 3), dont l'utilité sera indiquée plus loin.

Le coulisseau central 40 d'écartement des bi-cônes comporte dans sa partie supérieure un passage radial 41 de fixation du piston 50 destiné à déplacer le coulisseau selon la flèche A, ou inversement.

Dans la représentation de la figure 4, on remarquera que le coulisseau central 40 comporte deux ouvertures oblongues 42 et 43, donnant libre passage aux arbres 71 et 72, ainsi qu'une troisième ouverture oblongue 44, dont l'utilité sera mentionnée plus loin. Le coulisseau est traversé par un piton de guidage 45 dont les extrémités sont aptes à coulisser dans les rainures verticales 29 et 39 des prolongements 22 et 32 du boîtier 20 et de son couvercle 30 (voir figure 3). L'extrémité inférieure du coulisseau forme une fourchette 46 entre les dents 461 et 462 de laquelle un dégagement 463 autorise l'introduction de la queue 15 de la soupape 10. Les dents 461 et 462 présentent vers l'extérieur un dégagement 464, 465 tel que la fourchette 46 puisse s'introduire dans l'ouverture centrale 112 de la coupelle 11.

Dans sa partie disposée dans le boîtier 10, le coulisseau 40 est de section rectangulaire et, comme visible dans la coupe longitudinale de la figure 5, sa largeur 47 va décroissant de haut en bas. Le passage de la partie supérieure 471 à la partie médiane 472 est réalisée par deux pans inclinés symétriques 473. Sa partie inférieure 474 est encore rétrécie par rapport à la partie médiane 472, alors que la fourchette 46 a une largeur telle que, dans la position de présentation des bi-cônes de la figure 5, la queue de soupape puisse être introduite entre les dents de la fourchette 46.

Il est à noter que le coulisseau 40 est monté avec jeu par rapport au boîtier 20, dont l'ouverture centrale 25 est de dimension supérieure à la largeur 47 du coulisseau, de sorte qu'un déplacement angulaire par rapport à l'axe 45 est possible, comme on le verra par la suite.

La pince 60 est bien visible à la figure 5. Elle est constituée par deux mâchoires symétriques 61 et 62 destinées à coulisser sur les axes parallèles 71 et 72 passant au travers d'ouvertures 63. Pour faciliter ce déplacement, chaque ouverture comporte une bague à billes 64, maintenue dans un dégagement correspondant par un clips 65.

Une portion cylindrique 66 est fixée sur le côté de chaque mâchoire 61 et 62, par tout moyen connu de l'homme de métier, en saillie vers l'intérieur, et est destinée à coopérer avec les parties supérieure 471 et médiane 472 du coulisseau 40, ainsi qu'avec le pan incliné 473 les reliant.

Chaque mâchoire 61 ou 62 comporte en outre un dégagement 67 destiné à recevoir un ressort de compression 68 dont une extrémité appuie contre le fond du dégagement 67 et l'autre passe dans l'ouverture 233 ou 243 des ailes 23 ou 24 du boîtier, où elle est maintenue par une plaquette 681 fixée par un clips 682 inséré dans la rainure correspondante 234 ou 244. Les ressorts 67 ont tendance à rapprocher l'une vers l'autre les mâchoires 61 et 62 formant la pince 60.

Dans sa partie inférieure, chaque mâchoire 61 ou 62 comporte un dégagement 69 bordé par deux ailes 691 et 692 présentant un trou destiné à recevoir une goupille 693 de fixation du levier 80.

Lorsque le coulisseau central 40 se déplace dans le sens de la flèche A, ou inversement, les mâchoires de la pince 60 et par conséquent les leviers 80 sont déplacés dans le sens de la flèche B, ou inversement.

De plus, si le coulisseau est déplacé angulairement par rapport à l'axe 45 de la figure 5, il entraîne vers la droite ou la gauche l'ensemble constitué par les mâchoires 61 et 62 et leurs leviers 81 et 82, qui se déplacent le long des arbres parallèles 71 et 72.

Les leviers 81 et 82 sont symétriques et sont solidaires respectivement des mâchoires 61 et 62. Ils constituent les moyens de préhension des bi-cônes qui doivent être mis en place. Chaque levier 81 ou 82 comporte, dans sa partie supérieure un passage 83 pour la goupille 693 sur laquelle il est articulé par rapport à la mâchoire 61 ou 62. Dans sa partie médiane, chaque levier 81 ou 82 comporte un passage transversal 84 permettant de loger un ressort de traction 85 fixé entre les leviers 81 et 82 par des goupilles 851. A l'extrémité inférieure des leviers se trouve un épaulement 86 et un dégagement interne 87 de formes correspondant à celle du bi-cône 13 ou 14.

Le ressort 85 a pour mission de rapprocher les leviers 81 et 82 selon les flèches C. Il traverse le coulisseau central 40 dans l'ouverture oblongue 44 précédemment mentionnée.

Dans la partie de la figure 5 montrant la vue latérale de la liaison de la mâchoire 62 au levier 82 on remarquera la forme particulière donnée à l'extrémité 694 des ailes de la mâchoire, qui présente un plat destiné à servir de butée au rebord 88 du levier 82, qui reste ainsi sensiblement parallèle à l'axe central de l'ensemble.

Le dispositif de poussée 90, destiné à assurer la compression du ressort de soupape 12 comporte, comme visible à la figure 1 dans la partie représentée en coupe, une tige cylindrique 91, destinée à coulisser dans l'ouverture 37.

Dans sa partie supérieure, la tige 91 est rendue solidaire d'un bloc parallélépipédique 92 au moyen d'une vis 93. Pour éviter toute rotation de la tige 91, le bloc 92 comporte une ouverture 921 comportant un plat. Le bloc 92 présente une saillie 922 vers l'extérieur et peut être actionné dans le sens de la flèche D par un dispositif non représenté au dessin, pour venir en butée dans le fond du dégagement latéral 36, en comprimant un ressort 94 destiné à ramener le dispositif de poussée dans la position représentée à la figure 1. Le ressort 94 est disposé entre la face inférieure 923 du bloc 92 et le fond d'un logement 371 prévu à l'entrée de l'ouverture 37.

Dans sa partie inférieure, la tige 91 se termine par une partie arquée 95, destinée à appuyer sur la coupelle 11 de serrage du ressort de soupape 12. Un dégagement 951 est prévu pour le passage du rebord supérieur 113 de la coupelle.

En variante, on pourrait prévoir que la partie en appui sur la coupelle pour comprimer le ressort de soupape soit disposée entre le coulisseau central et les mâchoires et leurs leviers.

En résumé, les mouvements du dispositif décrit précédemment sont les suivants :

1. un déplacement vertical du coulisseau central 40 selon la flèche A (figure 1) ou inversement selon la flèche A' (figure 5), sous l'action du piston 50;

2. un déplacement latéral opposé des mâchoires 61 et 62 et de leurs leviers 81 et 82, selon la flèche B (figure 5) ou inversement, obtenu par roulement des portions cylindriques 66 sur les parties supérieure 471 ou médiane 472 du coulisseau central 47, ainsi que sur les pans inclinés symétriques 473;

3. une rotation des leviers 81 et 82 sur leur goupille 693 de fixation aux mâchoires 61 et 62, selon les flèches C (figure 5);

4. un déplacement vertical des dispositifs de poussée 90 selon la flèche D (figure 1), par un dispositif non représenté au dessin;

5. un déplacement angulaire du coulisseau central 40 sur l'axe du piton 45, lorsque la fourchette 46 pénètre dans la coupelle 11, déplacement angulaire qui entraîne un déplacement latéral des mâchoires 61 et 62 et de leurs leviers 81 et 82 le long des axes 71 et 72;

De plus, l'ensemble du dispositif décrit peut être déplacé par rapport à la console de la chaîne de transfert où il est monté.

On peut utiliser le dispositif décrit seul ou combiner avantageusement plusieurs ensembles, par exemple quatre pour équiper en une opération une culasse de quatre de ses soupapes dans une machine traversée par un convoyeur.

Le ou les dispositifs sont levés pour autoriser la mise en place des bi-cônes 13 et 14, amenés dans des alvéoles d'un chariot au-dessous du dispositif alors que le coulisseau central est dans la position basse représentée à la figure 5. Les bi-cônes sont positionnés alors de part et d'autre de la fourchette 46, en appui sur l'épaulement 86 et le dégagement interne 87 des leviers 81 et 82. Il n'y a pas de réglage à effectuer au niveau de la pince 60 et des leviers 81 et 82, la valeur d'écartement étant donnée par l'épaisseur de la fourchette 46 qui est choisie de façon que la queue de soupape 15 puisse pénétrer entre les bi-cônes dans le dégagement 463 formé entre les dents 461 et 462 de la fourchette. Le chariot de présentation des bi-cônes est alors écarté.

L'ensemble est ensuite descendu vers la culasse à équiper dans laquelle les soupapes sont mises en place, de manière connue de l'homme de métier, la coupelle 11 et le ressort 12 étant disposés au-dessous du dispositif, comme représenté à la figure 1.

Le dispositif de poussée 90, destiné à assurer la compression du ressort de soupape 12, est réglé, par positionnement des blocs 92, de telle manière que les portions arquées 95 soient en contact avec la coupelle 11 et compriment le ressort 12 alors que la queue de soupape 15 s'introduit entre les bi-cônes écartés par la fourchette 46, dans le dégagement 463. La course verticale du dispositif de poussée est réglée de façon que les bi-cônes soient en regard de leurs gorges respectives sur la queue de soupape.

Sous l'action du piston 50, le coulisseau 40 est alors retiré vers le haut, et les bi-cônes 13 et 14 sont placés sur les gorges 151 de la queue de soupape 15, sous l'action du ressort 85.

L'ensemble du dispositif est remonté verticalement, entraînant la remontée de la coupelle 11 sous l'action du ressort de soupape 12, de telle manière que les bi-cônes se logent dans le dégagement interne 111 de la coupelle. En fin de course de l'ensemble vers le haut, le vérin redescend le coulisseau central 40 dans la position de la figure 5 et un nouveau cycle peut avoir lieu.

Il est à noter que les positions extrêmes de présentation des bi-cônes et de retrait du coulisseau ne doivent pas être ajustées avec précision, puisque la mise en place des bi-cônes a lieu lorsque le coulisseau est retiré.

L'ensemble du dispositif est alors déplacé latéralement pour équiper les quatre soupapes restantes.

Tous les mouvements décrits ci-dessus peuvent être réalisés automatiquement, au moyen de vérins hydrauliques dont la commande est programmée dans une unité de gestion, assurant la succession des opérations et évitant tout mouvement indu.

## Revendications

1. Dispositif automatique de mise en place de soupapes (10), à une ou plusieurs gorges et à axe vertical ou incliné, d'un moteur à combustion interne au moyen de bi-cônes (13,14) insérés dans une coupelle (11) sur la queue de soupape (15), du côté opposé au ressort de soupape (12), ce dispositif comportant des moyens de poussée (90) aptes à coopérer avec la coupelle, pour maintenir ledit ressort dans une position prédéterminée de compression, caractérisé en ce qu'il comporte :

- une paire de mâchoires (61,62) déplaçables selon un axe B sensiblement perpendiculaire à la queue de soupape, et aptes à maintenir au moins indirectement lesdits bi-cônes (13,14), quelle que soit l'inclinaison de la queue de soupape (15) par rapport à la verticale; et

- un coulisseau central (40) déplaçable sensiblement dans l'axe de la queue de soupape entre une position non ajustée de présentation des bi-cônes et une position non ajustée de retrait du coulisseau, ledit coulisseau central comportant des moyens de commande du déplacement opposé de chaque mâchoire (61,62) selon l'axe B lors du déplacement du coulisseau, et la partie extrême (46) dudit coulisseau étant destinée à maintenir les bi-cônes écartés en position de présentation.

2. Dispositif selon la revendication 1, caractérisé par le fait que chaque mâchoire (61,62) est soumise à la poussée d'un ressort (68) agissant dans le sens inverse dudit déplacement opposé.

3. Dispositif selon la revendication 1 ou 2, caractérisé par le fait que chaque mâchoire (61,62) est montée coulissante sur deux arbres (71 et 72) parallèles audit axe B.

4. Dispositif selon la revendication 3, caractérisé par le fait que chaque mâchoire (61,62) est montée sur des roulements à billes (69).

5. Dispositif selon la revendication 1, caractérisé par le fait que chaque mâchoire (61,62) reçoit dans sa partie inférieure (69) un levier (81,82) articulé sur un axe (693) et dont l'extrémité comporte des moyens de préhension (86,87) d'un bi-cône.

6. Dispositif selon la revendication 5, caractérisé par le fait que lesdits leviers (81,82) sont rappelés l'un vers l'autre par un ressort (85).

7. Dispositif selon la revendication 1, caractérisé par le fait que les mâchoires (60), le coulisseau (40) et les moyens de poussée (90) sont logés dans un boîtier (20).

8. Dispositif selon la revendication 7, caractérisé par le fait que ledit boîtier est constitué par un fond (21) à deux ailes (23,24) et est muni d'un couvercle (30) symétrique au fond (21).

9. Dispositif selon les revendications 3 et 8, caractérisé par le fait que chaque aile (23;24) comporte deux ouvertures (231,232;241,242) aptes à recevoir l'extrémité des arbres (71,72).

10. Dispositif selon la revendication 8, caractérisé par le fait que le fond (21) et le couvercle (30) comportent chacun un prolongement central (22,32), une ouverture (27,37) destinée à recevoir les moyens de poussée étant pratiquée dans le fond, le couvercle et leurs prolongements respectifs.

11. Dispositif selon les revendications 3 et 6, caractérisé par le fait que le coulisseau (40) comporte des ouvertures oblongues longitudinales (42 à 44) pour le passage des arbres (71,72) et du ressort (85).

12. Dispositif selon la revendication 1, caractérisé par le fait que le coulisseau comporte un piton transversal (45) et est apte à pivoter sur l'axe de celui-ci pour assurer le parallélisme avec la queue de soupape.

13. Dispositif selon les revendications 10 et 12, caractérisé par le fait que les extrémités du piton (45) sont aptes à coulisser dans une rainure interne (29,39) de guidage ménagée dans la face interne de chaque prolongement central (23,32).

14. Dispositif selon la revendication 1, caractérisé par le fait que le coulisseau comporte deux faces opposées présentant chacune un pan incliné (43) entre deux parties planes (471,472) de largeur différente qui constituent les moyens de commande du déplacement opposé de chaque mâchoire (61,62) selon l'axe B lors du déplacement du coulisseau et qui est destiné à coopérer avec un corps cylindrique (66) en saillie sur les faces en regard de chaque mâchoire (61,62).

15. Dispositif selon la revendication 1, caractérisé par le fait que la partie extrême (46) dudit coulisseau destinée à maintenir les bi-cônes écartés en position de présentation est constituée par les dents (461,462) d'une fourchette bordant un dégagement central (463) apte à recevoir la queue de soupape (15).

16. Dispositif selon la revendication 15, caractérisé par le fait que les dents (461,462) présentent vers l'extérieur un dégagement (464,465) apte à coopérer avec l'ouverture centrale (112) de la coupelle (11).

17. Dispositif selon la revendication 10, caractérisé par le fait que les moyens de poussée (90) sont constitués par deux tiges cylindriques (91) destinées à coulisser dans ladite ouverture (27,37), chaque tige comportant à une extrémité un bloc (92) apte à coopérer avec des moyens de commande d'un mouvement selon la flèche D et à l'autre extrémité une partie arquée (95) destinée à appuyer sur la coupelle (11) de serrage du ressort de soupape (12).

18. Dispositif selon la revendication 17, caractérisé par le fait qu'un ressort (94) est disposé entre chaque bloc (92) et le fond (21), respectivement le couvercle (30), et est destiné à ramener le dispositif de poussée dans le sens inverse de la flèche D.

**Fig. 2**

**Fig. 3**

**Fig. 1**

**Fig. 4**

**Fig. 5**

# RAPPORT DE RECHERCHE
## EUROPEENNE

**EP 90 81 0783**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 471 553  (BRITISH LEYLAND)<br>* revendication 1; figure 2 *<br>— — — | 1 | B 23 P 19/04 |
| A | EP-A-0 158 088  (KRAUSE)<br>* figures *<br>— — — | 1 | |
| A | US-A-3 568 292  (INTER-LAKES ENG.)<br>* figure 7 *<br>— — — — — | 1 | |

| | DOMAINES TECHNIQUES RECHERCHES (Int. Cl.5) |
|---|---|
| | B 23 P<br>B 25 B<br>F 01 L |

Le présent rapport de recherche a été établi pour toutes les revendications

| Lieu de la recherche | Date d'achèvement de la recherche | Examinateur |
|---|---|---|
| La Haye | 21 janvier 91 | RIS M. |